(19) **Europäisches Patentamt / European Patent Office / Office européen des brevets**

(11) **EP 4 379 133 A1**

(12) **EUROPEAN PATENT APPLICATION**
published in accordance with Art. 153(4) EPC

(43) Date of publication:
**05.06.2024 Bulletin 2024/23**

(51) International Patent Classification (IPC):
***D21H 19/00*** (2006.01)    ***A47K 10/16*** (2006.01)

(21) Application number: **21951637.4**

(86) International application number:
**PCT/CN2021/130869**

(22) Date of filing: **16.11.2021**

(87) International publication number:
**WO 2023/005065 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.07.2021 CN 202110851959**

(71) Applicants:
• **Beijing Bloomage Hyingc and Technology Co., Ltd.**
  **Beijing 101407 (CN)**

• **Bloomage Biotechnology Corporation Limited**
  **Jinan, Shandong 250101 (CN)**

(72) Inventors:
• **LIU, Zhe**
  **Jinan, Shandong 250101 (CN)**
• **YANG, Juan**
  **Jinan, Shandong 250101 (CN)**

(74) Representative: **Abel & Imray LLP**
**Westpoint Building**
**James Street West**
**Bath BA1 2DA (GB)**

(54) **COMPOSITION CONTAINING SODIUM HYALURONATE AND APPLICATION THEREOF**

(57)    A composition containing sodium hyaluronate and an application thereof. The composition has water activity of 0.330 to 0.930, and sodium hyaluronate makes up 0.01 to 5% of the composition in terms of the mass percentage. The composition comprises sodium hyaluronate and a water activity regulator. By means of controlling the water activity, the composition may reduce the risk of corrosion of cast iron devices, ensure the coating uniformity of paper products, improve the softness of the paper products, and give the paper products certain emollient properties.

EP 4 379 133 A1

**Description**

**TECHNICAL FIELD**

The present application relates to the technical field of the preparation of paper products, and in particular to a composition comprising sodium hyaluronate and use thereof.

**BACKGROUND ART**

In recent years, ultra-soft paper has become more and more popular in the market. Compared with ordinary paper towels, ultra-soft paper causes less damage to the skin barrier when wiping the skin.

Typically, ultra-soft paper is obtained by coating a certain finishing solution to ordinary paper towels.

In order to further improve the gentleness of ultra-soft paper to skin, people try to add sodium hyaluronate polymer into a finishing solution formula. However, since sodium hyaluronate polymer is a strong electrolyte, after adding it into a water-based finishing solution, the resulting mixture will cause electrochemical corrosion of production equipment comprising cast iron, and the yellow-brown rust water caused by the corroded equipment will contaminate the paper towel products.

**SUMMARY OF THE APPLICATION**

In view of the above problems, the present application provides a composition comprising sodium hyaluronate, and this composition is used in paper finishing to reduce the corrosion risk of cast iron equipment by controlling the water activity of the composition and ensure the coating uniformity of paper products.

The present application comprises the following technical solutions:

1. A composition comprising sodium hyaluronate, wherein the water activity of the composition is 0.330-0.930, and the sodium hyaluronate makes up 0.01-5% of the composition in terms of mass percentage.

2. The composition according to item 1, wherein the composition further comprises a water activity regulator.

3. The composition according to item 1 or 2, wherein the molecular weight of the sodium hyaluronate is 1,000-3000,000 Da, preferably 200,000-400,000 Da.

4. The composition according to item 1 or 2, wherein the water activity regulator is a substance that can form hydrogen bonds with water, preferably a substance comprising hydroxyl group, carbonyl group or aldehyde group, and further preferably glycerol, glucose, sucrose, sodium hyaluronate monomer, fructose, xylitol, mannose, arabinose or sodium polyacrylate.

5. The composition according to any one of items 1-4, wherein the water activity regulator makes up 10-95%, preferably 45-90%, of the composition in terms of mass percentage.

6. Use of the composition according to any one of items 1-5 in paper finishing.

7. A paper finishing solution comprising the composition according to any one of items 1-5.

8. The paper finishing solution according to item 7, wherein the paper finishing solution further comprises auxiliary materials.

9. A paper product, wherein the paper product comprises the paper finishing solution according to item 7 or 8.

10. The paper product according to item 9, wherein the coating amount of the paper finishing solution is 1-50 wt%.

**EFFECT OF THE APPLICATION**

The composition provided by the present application may reduce the corrosion risk of cast iron equipment and ensure the coating uniformity of paper products by controlling the water activity of the composition.

By controlling the two factors of sodium hyaluronate content and water activity value, the composition of the present is coated on paper products to reduce the corrosion speed of cast iron equipment and ensure the coating uniformity of paper, as well as improving the softness of paper products, and giving the paper products a certain emollient properties.

**DETAILED DESCRIPTION OF THE APPLICATION**

The present application will be described in detail below. Although particular Examples of the application are provided, it should be understood that the application may be performed in various forms, and should not be limited to the Examples described herein. Rather, these Examples are provided for thorough understanding of the present application, and fully conveying the scope of the present application to those skilled in the art.

It should be noted that, certain words are used in the specification and claims to refer to specific components. Those skilled in the art will understand that they may use different names to refer to the same component. The specification and the claims do not use difference in nouns as a way of distinguishing components, but use differences in functions of the components as a criterion for distinguishing. "Comprising" or "including" mentioned throughout the specification and claims are open-ended terms, so it should be interpreted as "including but not limited to." The following descriptions in the specification are preferred embodiments for implementing the present application. However, the descriptions are for the purpose of general principles of the description and are not intended to limit the scope of the present application. The protection scope of the present application shall be defined by the appended claims.

The present application provides a composition comprising sodium hyaluronate, wherein the water activity of the composition is 0.330-0.930, and the sodium hyaluronate makes up 0.01-5% of the composition in terms of mass percentage.

For example, the water activity of the composition may be 0.330, 0.400, 0.500, 0.600, 0.700, 0.800, 0.900, or 0.930, etc.

The sodium hyaluronate makes up 0.01%, 0.05%, 0.1%, 0.5%, 1%, 2%, 3%, 4%, or 5%, etc. of the composition in terms of mass percentage.

The water activity of the composition refers to the water activity measured after adding water. After adding water, water makes up 5-60% of the total amount of the composition and water in terms of mass percentage.

In one embodiment, the composition further comprises water activity regulator.

In one embodiment, the water activity regulator makes up 10-95%, preferably 45-90%, of the composition in terms of mass percentage.

For example, the water activity regulator makes up 10%, 20%, 30%, 40%, 50%, 60%, 70%, 80%, 90%, or 95%, etc. of the composition in terms of mass percentage.

In one embodiment, the molecular weight of the sodium hyaluronate is 1,000-3000,000 Da, preferably 200,000-400,000 Da, further preferably 35w Da.

For example, the molecular weight of the sodium hyaluronate may be 1,000Da, 5,000Da, 10,000 Da, 200,000 Da, 250,000 Da, 300,000 Da, 350,000 Da, 400,000 Da, 500,000 Da, 1000,000 Da, 2000,000 Da, or 3000,000 Da, etc.

In one embodiment, the water activity regulator is a substance that can form hydrogen bonds with water. For example, it may be a small molecule substance, a macromolecular substance or a polymer substance comprising hydroxyl group, carboxyl group, amino group, or aldehyde group, and preferably it may be glycerol, glucose, sucrose, sodium hyaluronate monomer, fructose, xylitol, mannose, arabinose or sodium polyacrylate.

In one embodiment, the molecular weight of the sodium hyaluronate monomer is 380 Da.

In one embodiment, the water activity of the composition is 0.330-0.930, the sodium hyaluronate makes up 0.01-5% of the composition in terms of mass percentage, and the composition further comprises a water activity regulator.

In one embodiment, the water activity of the composition is 0.330-0.930, the sodium hyaluronate makes up 0.01-5% of the composition in terms of mass percentage, and the composition further comprises a water activity regulator, wherein the molecular weight of sodium hyaluronate is 1000-3000,000 Da, preferably 200,000-400,000 Da.

In one embodiment, the water activity of the composition is 0.330-0.930, the sodium hyaluronate makes up 0.01-5% of the composition in terms of mass percentage, and the composition further comprises a water activity regulator, wherein the molecular weight of sodium hyaluronate is 1000-3000,000 Da, preferably 200,000-400,000 Da. The water activity regulator is a substance that can form hydrogen bonds with water, preferably a substance comprising hydroxyl group, a carbonyl group or aldehyde group, and further preferably glycerin, glucose, sucrose, sodium hyaluronate monomer, fructose, xylitol, mannose, arabinose or sodium polyacrylate.

In one embodiment, the water activity of the composition is 0.330-0.930, the sodium hyaluronate makes up 0.01-5% of the composition in terms of mass percentage, and the composition further comprises a water activity regulator, wherein the molecular weight of sodium hyaluronate is 1000-3000,000 Da, preferably 200,000-400,000 Da. The water activity regulator is a substance that can form hydrogen bonds with water, preferably a substance comprising hydroxyl group, a carbonyl group or aldehyde group, and further preferably glycerin, glucose, sucrose, sodium hyaluronate monomer, fructose, xylitol, mannose, arabinose or sodium polyacrylate, the water activity regulator is 10-95%, preferably 45-90% of the composition in terms of mass percentage.

The present application uses the above composition, a water activity regulator is used to control the water activity of the composition, and sodium hyaluronate is used to reduce the risk of corrosion of cast iron equipment and ensure the coating uniformity of paper products.

The present application provides use of the above composition in paper finishing.

The use of the above composition can ensure the coating uniformity of paper products during the preparation process of the paper product, and reduce the corrosion risk of the cast iron equipment used in the process.

The present application provides a paper finishing solution comprising the above composition.

In one embodiment, the paper finishing solution further comprises auxiliary materials.

The auxiliary materials are well-known auxiliary materials in the art. For example, the auxiliary materials may be viscosity regulators, preservatives, polymers (cationic polymers, nonionic polymers), salts, lipids, surfactants or emulsifiers, flavors, silicone oils, mineral oils, vegetable oils, etc.

When using the above paper finishing solution for on-line spraying, experiments show that when the water activity of the paper finishing solution is lower than 0.330, the uniformity of the paper finishing solution on the paper (distribution of the amount of solution applied) will be affected, that is, the solution has poor diffusivity after spraying,

In addition, the corrosiveness of the above paper finishing solution to cast iron equipment was studied through an iron sheet soaking experiment, and the discoloration time of the soaking solution was used to evaluate the level of corrosiveness. Since a production cycle (i.e., a cleaning period) is 8 hours, as long as the discoloration time is greater than or equal to 8 hours, the corrosiveness is considered acceptable. Research has found that, when the water activity of the finishing solution is less than 0.930, the discoloration time is greater than or equal to 8 hours.

The present application uses the above paper finishing solution to control its water activity within the range of 0.330-0.930, which can not only make the paper products evenly coated, but also reduce the risk of corrosion of cast iron equipment.

The present application provides a method for preparing a paper finishing solution, which comprises the following steps:

dissolving sodium hyaluronate and a water activity regulator in water, preferably in deionized water, to obtain a paper finishing solution.

The present application provides a paper product, which comprises the above paper finishing solution.

In one embodiment, the coating amount of the paper finishing solution is 1-50 wt%.

Since the composition of the present application uses sodium hyaluronate and a water activity regulator, the water activity of the composition can be controlled within the range of 0.330-0.930, and the resulting paper finishing solution is coated on the paper to make the paper product evenly coated, and since the time period for an iron sheet to begin to rust is more than 8 hours, the risk of corrosion of the cast iron equipment used in paper product preparation may be reduced, and the resulting paper product has high softness and certain emollient properties.

EXAMPLES

The present application provides a general and/or specific description of the materials and test methods used in the following tests. In the following Examples, if there are no other special instructions, % means wt%, that is, weight percentage. If the manufacturer of the reagents or instruments used is not indicated, they are all conventional reagent products that can be purchased commercially.

**Example 1**

Sodium hyaluronate and a water activity regulator with a different mass are respectively dissolved in deionized water to obtain paper finishing solutions, the amounts of sodium hyaluronate, water activity regulator and deionized water in the paper finishing solutions are shown in Table 1, which are numbered 1-12.

**Comparative Example 1**

Sodium hyaluronate and a water activity regulator with different mass are respectively dissolved in deionized water to obtain paper finishing solutions, the amounts of sodium hyaluronate, water activity regulator and deionized water in the paper finishing solution are shown in Table 1, which are numbered 13-27.

Table 1: Contents of sodium hyaluronate and water activity regulator in the paper finishing solutions in Example 1 and Comparative Example 1

| Number | Composition Formula | | |
|---|---|---|---|
| | Amount of sodium hyaluronate (350,000 Da) | Water activity regulator and its amount | Amount of deionized water |
| 1 | 0.01g | glycerin, 50g | 49.99g |
| 2 | 0.01g | glycerin, 70g | 29.99g |
| 3 | 0.20g | glycerin, 50g | 49.80g |
| 4 | 0.20g | glycerin, 70g | 29.80g |

(continued)

| Number | Composition Formula | | |
|---|---|---|---|
| | Amount of sodium hyaluronate (350,000 Da) | Water activity regulator and its amount | Amount of deionized water |
| 5 | 0.20g | glycerin, 80g | 19.80g |
| 6 | 0.20g | glycerin, 90g | 9.80g |
| 7 | 0.50g | glycerin, 50g | 49.50g |
| 8 | 0.50g | glycerin, 70g | 29.50g |
| 9 | 5.00g | glycerin, 45g | 50.00g |
| 10 | 0.20g | glucose, 60g | 39.80g |
| 11 | 0.20g | sucrose, 60g | 39.80g |
| 12 | 0.20g | sodium hyaluronate monomer, 50g, (molecular weight 380 Da) | 49.80g |
| 13 | 0.01g | glycerin, 0g | 99.99g |
| 14 | 0.01g | glycerin, 20g | 79.99g |
| 15 | 0.01g | glycerin, 30g | 69.99g |
| 16 | 0.01g | glycerin40g | 59.99g |
| 17 | 0.20g | glycerin, 0g | 99.80g |
| 18 | 0.20g | glycerin, 30g | 69.80g |
| 19 | 0.50g | glycerin, 0g | 99.50g |
| 20 | 0.50g | glycerin, 30g | 69.50g |
| 21 | 0.50g | glycerin, 80g | 19.50g |
| 22 | 0.50g | glycerin, 90g | 9.50g |
| 23 | 5.00g | glycerin, 0g | 95.00g |
| 24 | 5.00g | glycerin, 30g | 65.00g |
| 25 | 6.00g | glycerin, 30g | 64.00g |
| 26 | 6.00g | glycerin, 35g | 59.00g |
| 27 | 10.00g | glycerin, 0g | 90.00g |

**Test Example 1: Determination of the Content of Sodium Hyaluronate**

The content of sodium hyaluronate in the paper finishing solution was determined according to the method in patent CN109298112A, and the results are shown in Table 2.

Table 2: The percentage contents of sodium hyaluronate and water activity regulator in the paper finishing solution in Example 1 and Comparative Example 1

| Number | Composition Formula | | |
|---|---|---|---|
| | Amount of sodium hyaluronate | Water activity regulator and its amount | Amount of deionized water |
| 1 | 0.01% | glycerin, 50% | 49.99% |
| 2 | 0.01% | glycerin, 70% | 29.99% |
| 3 | 0.20% | glycerin, 50% | 49.80% |

(continued)

| Number | Composition Formula | | |
|---|---|---|---|
| | Amount of sodium hyaluronate | Water activity regulator and its amount | Amount of deionized water |
| 4 | 0.20% | glycerin, 70% | 29.80% |
| 5 | 0.20% | glycerin, 80% | 19.80% |
| 6 | 0.20% | glycerin, 90% | 9.80% |
| 7 | 0.50% | glycerin, 50% | 49.50% |
| 8 | 0.50% | glycerin, 70% | 29.50% |
| 9 | 5.00% | glycerin, 45% | 50.00% |
| 10 | 0.20% | glucose, 60% | 39.80% |
| 11 | 0.20% | sucrose, 60% | 39.80% |
| 12 | 0.20% | sodium hyaluronate monomer, 50%, molecular weight 380Da) | 49.80% |
| 13 | 0.01% | glycerin, 0% | 99.99% |
| 14 | 0.01% | glycerin, 20% | 79.99% |
| 15 | 0.01% | glycerin, 30% | 69.99% |
| 16 | 0.01% | glycerin, 40% | 59.99% |
| 17 | 0.20% | glycerin, 0% | 99.80% |
| 18 | 0.20% | glycerin, 30% | 69.80% |
| 19 | 0.50% | glycerin, 0% | 99.50% |
| 20 | 0.50% | glycerin, 30% | 69.50% |
| 21 | 0.50% | glycerin, 80% | 19.50% |
| 22 | 0.50% | glycerin, 90% | 9.50% |
| 23 | 5.00% | glycerin, 0% | 95.00% |
| 24 | 5.00% | glycerin, 30% | 65.00% |
| 25 | 6.00% | glycerin, 30% | 64.00% |
| 26 | 6.00% | glycerin, 35% | 59.00% |
| 27 | 10.00% | glycerin, 0% | 90.00% |

## Test Example 2: Measurement of Water Activity

"Swiss ROTRONIC Hygrolab-C1-SET benchtop water activity meter" or equivalent equipment was used in this example.

10 ml of different paper finishing solutions obtained in Example 1 and Comparative Example 1 was taken respectively to place them in a sample pool for water activity testing, then sealing the sample pool with a test probe, and keeping it still in an environment of 25°C +/-2°C for 1 hour. When the water activity reached a stable value, the water activity of each sample was record. Each sample was tested three times, and the average value was taken. The results are shown in Table 3.

Table 3: Measurement results of the water activity

| Number | Water activity of the composition (Aw) |
|---|---|
| 1 | 0.871 |
| 2 | 0.744 |

(continued)

| Number | Water activity of the composition (Aw) |
|---|---|
| 3 | 0.853 |
| 4 | 0.675 |
| 5 | 0.530 |
| 6 | 0.332 |
| 7 | 0.861 |
| 8 | 0.618 |
| 9 | 0.846 |
| 10 | 0.921 |
| 11 | 0.923 |
| 12 | 0.929 |
| 13 | 1.000 |
| 14 | 0.998 |
| 15 | 0.989 |
| 16 | 0.955 |
| 17 | 0.995 |
| 18 | 0.980 |
| 19 | 0.994 |
| 20 | 0.942 |
| 21 | 0.311 |
| 22 | 0.307 |
| 23 | 0.981 |
| 24 | 0.933 |
| 25 | 0.911 |
| 26 | 0.907 |
| 27 | 0.960 |

**Test Example 3: Corrosion to Cast Iron Equipment**

A clean bottle with a lid (which has a volume of 100 ml and is made of PP material) was used as a container.

2cm*4cm*0.5cm cast iron sheet was used.

Before testing the iron sheet, sandpaper was used to remove the rust on the surface, and surfactant to thoroughly clean the oil stains and contaminants on the surface, after cleaning, rinsing the surfactant away with DI water and dry it with paper towels, then, within 1 minute, placing the iron sheet in the container, using 90 ml of the paper finishing solution of Example 1 and Comparative Example 1 to completely immerse the iron sheet, and sealing the lid.

The soaking mixture (iron sheet + paper finishing solution) was placed in a constant temperature oven at 25°C +/-2°C, then observing the color of the solution every half hour.

When the color of the soaking solution changed from colorless to yellow (rust color) that can be distinguished by the naked eye, the discoloration time was recorded. The results are shown in Table 4.

Table 4: The results of the time period for an iron sheet to begin to rust (hr)

| Number | Time period for an iron sheet to begin to rust (hr) |
|---|---|
| 1 | 13 |

(continued)

| Number | Time period for an iron sheet to begin to rust (hr) |
|---|---|
| 2 | 16 |
| 3 | 11 |
| 4 | 10.5 |
| 5 | 12 |
| 6 | 12 |
| 7 | 9 |
| 8 | 11 |
| 9 | 9 |
| 10 | 8 |
| 11 | 8 |
| 12 | 8 |
| 13 | 4 |
| 14 | 4 |
| 15 | 4 |
| 16 | 4.5 |
| 17 | 3.5 |
| 18 | 3.5 |
| 19 | 3.5 |
| 20 | 5.5 |
| 21 | 12 |
| 22 | 13 |
| 23 | 3 |
| 24 | 6 |
| 25 | 8 |
| 26 | 8 |
| 27 | 3 |

**Test Example 4: Coating Uniformity of Paper Products**

After spraying a paper finishing solution described in Example 1 and Comparative Example 1, the base material of a paper product is rolled into a roll and wrapped with a PE film, keeping it to rest for 3 days for curing, after the curing is completed, the outermost 10 layers of the paper roll were stripped to take a sample.

30 samples of 5cm*5cm paper were cut evenly along the CD direction (perpendicular to the motion direction when the paper was coated) of the paper roll, and an analytical balance was used to weigh them respectively within 30 minutes in an environment of 25°C +/-2°C, recording the weights as M1, M2, M3, M4,...M30.

These 30 samples were placed in an oven at 105°C for 30 minutes, then quickly taking them out to weigh by an analytical balance in an environment of 25°C+/-2°C, recording the weights as N 1, N2, N3...N30.

The mass loss of each sample are calculated as D1, D2, D3.. D30,

$$Di=Mi-Ni;$$

the average mass loss is: DN=(D1+D2+...+D30)/30.

After calculating the standard deviation STD of D1~D30,
the relative standard deviation are calculated as RSD = STD/DN.
When the RSD is less than or equal to 5%, the coating of the paper product is considered to be uniform, and the measurement results are shown in Table 5.

Table 5: The results of the coating uniformity for the paper products

| Number | Coating Uniformity of Paper Products |
|--------|--------------------------------------|
| 1 | Uniform |
| 2 | Uniform |
| 3 | Uniform |
| 4 | Uniform |
| 5 | Uniform |
| 6 | Uniform |
| 7 | Uniform |
| 8 | Uniform |
| 9 | Uniform |
| 10 | Uniform |
| 11 | Uniform |
| 12 | Uniform |
| 13 | Uniform |
| 14 | Uniform |
| 15 | Uniform |
| 16 | Uniform |
| 17 | Uniform |
| 18 | Uniform |
| 19 | Uniform |
| 20 | Uniform |
| 21 | Uneven |
| 22 | Uneven |
| 23 | Uniform |
| 24 | Uniform |
| 25 | Uneven |
| 26 | Uneven |
| 27 | Uneven |

In summary, since the composition of the present application comprises sodium hyaluronate and a water activity regulator, after being prepared into a paper finishing solution, it can be used to ensure the coating uniformity of paper products and reduce the risk of corrosion of cast iron equipment, as well as improving the softness of the paper products, making the paper products have a certain degree of emollient properties.
The above are only preferred examples of the present application, and are not intended to limit the present application in other forms. Any skilled person familiar with the art may make changes or modifications to obtain equivalent examples with equivalent changes by using the technical contents disclosed above. However, any simple modifications, equivalent changes and variations made to the above examples based on the technical essence of the present application without departing from the content of the technical solution of the present application still fall within the protection scope of the technical solution of the present application.

**Claims**

1. A composition comprising sodium hyaluronate, wherein the water activity of the composition is 0.330-0.930, and the sodium hyaluronate makes up 0.01-5% of the composition in terms of mass percentage.

2. The composition according to claim 1, wherein the composition further comprises a water activity regulator.

3. The composition according to claim 1 or 2, wherein the molecular weight of the sodium hyaluronate is 1,000-3000,000 Da, preferably 200,000-400,000 Da.

4. The composition according to claim 1 or 2, wherein the water activity regulator is a substance that can form hydrogen bonds with water, preferably a substance comprising hydroxyl group, carbonyl group or aldehyde group, and further preferably glycerol, glucose, sucrose, sodium hyaluronate monomer, fructose, xylitol, mannose, arabinose or sodium polyacrylate.

5. The composition according to any one of claims 1-4, wherein the water activity regulator makes up 10-95%, preferably 45-90%, of the composition in terms of mass percentage.

6. Use of the composition according to any one of claims 1-5 in paper finishing.

7. A paper finishing solution comprising the composition according to any one of claims 1-5.

8. The paper finishing solution according to claim 7, wherein the paper finishing solution further comprises auxiliary materials.

9. A paper product, wherein the paper product comprises the paper finishing solution according to claim 7 or 8.

10. The paper product according to claim 9, wherein the coating amount of the paper finishing solution is 1-50 wt%.

## INTERNATIONAL SEARCH REPORT

International application No.

**PCT/CN2021/130869**

### A. CLASSIFICATION OF SUBJECT MATTER

D21H 19/00(2006.01)i; A47K 10/16(2006.01)i

According to International Patent Classification (IPC) or to both national classification and IPC

### B. FIELDS SEARCHED

Minimum documentation searched (classification system followed by classification symbols)

D21H; A47K

Documentation searched other than minimum documentation to the extent that such documents are included in the fields searched

Electronic data base consulted during the international search (name of data base and, where practicable, search terms used)

CNABS; CNTXT; DWPI; SIPOABS; 读秀, DUXIU: 纸, 葡萄糖, 涂布, 甘露糖, 透明质酸钠, 果糖, 聚丙烯酸钠, 木糖醇, 甘油, 蔗糖, 羟基, paper, glucose, coating, mannose, sodium, hyaluronate, fructose, sodium, polyacrylate, xylitol, glycerol, sucrose, hydroxyl

### C. DOCUMENTS CONSIDERED TO BE RELEVANT

| Category* | Citation of document, with indication, where appropriate, of the relevant passages | Relevant to claim No. |
|---|---|---|
| X | CN 111433410 A (MIYOSHI YUSHI KK) 17 July 2020 (2020-07-17) description, paragraphs 0017-0060 | 1-10 |
| A | CN 101410044 A (DAIO PAPER CORPORATION) 15 April 2009 (2009-04-15) entire document | 1-10 |
| A | JP 2018109244 A (MIYOSHI YUSHI K.K.) 12 July 2018 (2018-07-12) entire document | 1-10 |
| A | JP 2001346709 A (FANCL CORP. et al.) 18 December 2001 (2001-12-18) entire document | 1-10 |
| A | JP 2007044539 A (DAIO SEISHI K.K.) 22 February 2007 (2007-02-22) entire document | 1-10 |
| A | CN 204551134 U (CHINA TOBACCO FUJIAN INDUSTRIAL CO., LTD.) 12 August 2015 (2015-08-12) entire document | 1-10 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 March 2022** | **26 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/130869**

| Patent document cited in search report | | | Publication date (day/month/year) | Patent family member(s) | | | Publication date (day/month/year) |
|---|---|---|---|---|---|---|---|
| CN | 111433410 | A | 17 July 2020 | JP | 6393821 | B1 | 19 September 2018 |
| | | | | JP | 2019099938 | A | 24 June 2019 |
| | | | | US | 2020308770 | A1 | 01 October 2020 |
| | | | | US | 11242655 | B2 | 08 February 2022 |
| | | | | TW | 201925574 | A | 01 July 2019 |
| | | | | TW | I706069 | B | 01 October 2020 |
| | | | | EP | 3719199 | A1 | 07 October 2020 |
| | | | | EP | 3719199 | A4 | 25 August 2021 |
| | | | | WO | 2019106985 | A1 | 06 June 2019 |
| CN | 101410044 | A | 15 April 2009 | JP | 2007260161 | A | 11 October 2007 |
| | | | | JP | 5073957 | B2 | 14 November 2012 |
| | | | | KR | 20090005051 | A | 12 January 2009 |
| | | | | KR | 101329544 | B1 | 15 November 2013 |
| | | | | CN | 101410044 | B | 07 March 2012 |
| | | | | WO | 2007116720 | A1 | 18 October 2007 |
| JP | 2018109244 | A | 12 July 2018 | JP | 6747966 | B2 | 26 August 2020 |
| JP | 2001346709 | A | 18 December 2001 | None | | | |
| JP | 2007044539 | A | 22 February 2007 | JP | 4833784 | B2 | 07 December 2011 |
| CN | 204551134 | U | 12 August 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109298112 A